(19) **Europäisches Patentamt**

**European Patent Office**

**Office européen des brevets**

(11) **EP 0 659 621 B1**

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(51) Int. Cl.$^6$: **B60T 11/34**, F16K 17/04, G05D 16/10

(21) Anmeldenummer: **94117194.4**

(22) Anmeldetag: **31.10.1994**

(54) **Druckbegrenzungseinrichtung**

Pressure limiting device

Dispositif de limitation de pression

(84) Benannte Vertragsstaaten:
**DE FR GB IT SE**

(30) Priorität: **24.12.1993 DE 4344416**

(43) Veröffentlichungstag der Anmeldung:
**28.06.1995 Patentblatt 1995/26**

(73) Patentinhaber: **WABCO GmbH**
**30453 Hannover (DE)**

(72) Erfinder:
• **Deike, Karl-Heinz**
**D-30982 Pattensen (DE)**

• **Herzog, Stefan**
**D-29223 Celle (DE)**
• **Förster, Hennig**
**D-30177 Hannover (DE)**

(74) Vertreter:
**Schrödter, Manfred, Dipl.-Ing.**
**WABCO GmbH**
**Postfach 91 12 80**
**30432 Hannover (DE)**

(56) Entgegenhaltungen:
| | |
|---|---|
| EP-A- 0 065 151 | DE-A- 2 922 837 |
| DE-A- 3 001 368 | DE-A- 3 026 283 |
| DE-A- 4 114 977 | DE-C- 3 311 816 |

**Beschreibung**

Die Erfindung betrifft eine Druckbegrenzungseinrichtung nach dem Oberbegriff des Patentanspruchs 1.

Eine solche Druckbegrenzungsreinrichtung ist aus der WABCO Westinghouse Druckschrift "Druckbegrenzungsventil 475 010", Ausgabe Oktober 1975, bekannt. Infolge des großen Querschnitts der Verbindung zwischen der Druckabbaukammer dieser Druckbegrenzungseinrichtung und der als Druckentlastungsraum dienenden Atmosphäre ist es bei einer mit dieser Druckbegrenzungseinrichtung ausgerüsteten Druckmittelanlage möglich, daß eine Undichtigkeit zwischen der Schaltkammer und der Druckabbaukammer zum vollständigen Druckverlust in der Druckmittelanlage und damit zum Ausfall derselben führt.

Der Erfindung liegt die Aufgabe zugrunde, eine derartige Druckbegrenzungseinrichtung mit einfachen Mitteln so fortzubilden, daß sie eine geringere Ausfallgefährdung der Druckmittelanlage gewährleistet.

Diese Aufgabe wird durch die in dem Patentanspruch 1 angegebene Erfindung gelöst. Vorteilhafte Ausgestaltungen und Anwendungsfälle sind in dem Unteranspruch angegeben.

Die Erfindung läßt sich an Druckbegrenzungseinrichtungen jeder Bauart, beispielsweise mit einem Membran-Kolbenglied, und in Verbindung mit jedem Druckmittel, beispielsweise auch gasförmigen, ausführen. Dient als Druckmittel Luft, so wird im allgemeinen zugleich der Druckentlastungsraum von der Atmosphäre gebildet. Anderenfalls ist der Druckentlastungsraum ein gegenüber der Atmosphäre im wesentlichen überdruckfreier Auffang- oder Sammelbehälter, der im allgemeinen zugleich als Ansaugraum für die Druckerzeugungsanlage dient. Die Verbindung zwischen der Druckabbaukammer und dem Druckentlastungsraum kann durch direkte Mündung des Durchgangs von der Druckabbaukammer, aber auch über eine Druckmittelleitung, erfolgen.

Weitere Vorteile der Erfindung werden in deren nunmehr folgender Erläuterung anhand zeichnerisch dargestellter Ausführungsbeispiele genannt. Unter durchgehender Verwendung gleicher Bezugszeichen für Bauelemente mit gleichen Funktionen zeigen

Fig. 1    schematisch eine einkreisige Druckmittelanlage mit einer Druckbegrenzungseinrichtung,

Fig. 2    schematisch eine zweikreisige Druckmittelanlage mit einer Druckbegrenzungseinrichtung,

Fig. 3    schematisch eine dreikreisige Druckmittelanlage mit einer Druckbegrenzungseinrichtung.

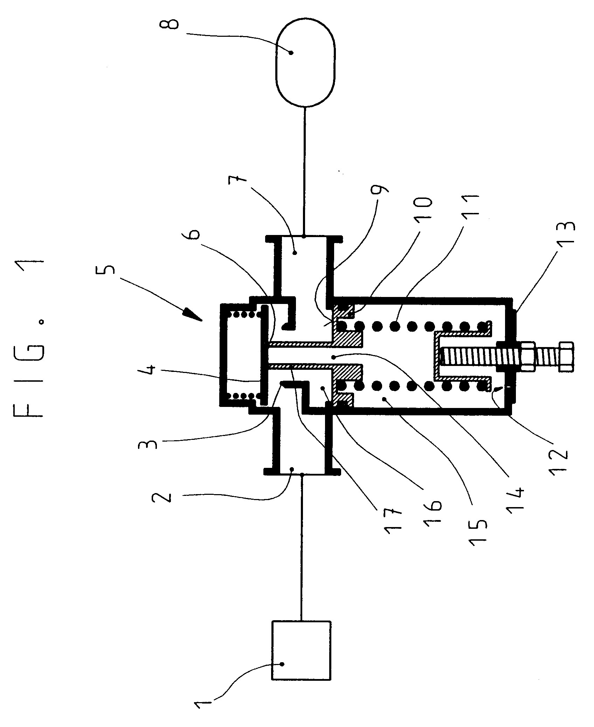

In Fig. 1 ist der Einlaß (2) einer insgesamt mit (5) bezeichneten Druckbegrenzungseinrichtung mit einer Druckerzeugungsanlage (1) verbunden, während der Auslaß (7) der Druckbegrenzungseinrichtung mit einem durch seinen Vorratsbehälter symbolisierten Verbraucherkreis (8) verbunden ist.

Als Druckmittel dient Luft.

Die Druckerzeugungsanlage (1) enthält in üblicher Weise einen Druckerzeuger (Kompressor bzw. Pumpe) sowie, gegebenenfalls, Druckspeicher, Druckregeleinrichtungen und Druckmittel-Kühleinrichtungen, Druckmittel-Reinigungseinrichtungen und Druckmittel-Trocknungseinrichtungen und ist schematisch nur als Block dargestellt.

In der Druckbegrenzungseinrichtung (5) sind eine Schaltkammer (16) und eine Druckabbaukammer (15) vorgesehen. Die Schaltkammer (16) ist mit dem Auslaß (7) und damit mit dem Verbraucherkreis (8) verbunden. Die Druckabbaukammer (15) ist über eine Drossel (12) mit der als Druckentlastungsraum dienenden Atmosphäre verbunden. Die atmsophärenseitige Mündung der Drossel (12) ist durch eine elastische Scheibe (13) abgedeckt. Diese verhindert nach Art eines Rückschlagventils eine Strömung aus der Atmosphäre in die Druckabbaukammer (15) und damit in die Druckbegrenzungseinrichtung (5) und verhindert so den Zutritt von Verunreinigungen und Feuchtigkeit.

Im Falle der Verwendung eines anderen Druckmittels als Luft ist die, im Ausführungsbeispiel atmosphärenseitige, Mündung der Drossel (12) direkt oder über eine Druckmittelleitung mit einem dann als Druckentlastungsraum dienenden Auffang- oder Sammelbehälter verbunden.

In der Druckbegrenzungseinrichtung (5) ist ein Einlaßventil (3, 4) vorgesehen, welches aus einem gehäusefesten Einlaßsitz (3) und einem beweglichen Ventilkörper (4) besteht. Der gehäusefeste Einlaßsitz (3) umschließt einen Durchbruch in einer zwischen dem Einlaß (2) und dem Auslaß (7) angeordneten Gehäusewand.

Zur Steuerung der Bewegung des Ventilkörpers (4) enthält die Druckbegrenzungseinrichtung (5) ein bewegliches Kolbenglied (10, 17), welches die Schaltkammer (16) abgedichtet von der Druckabbaukammer (15) trennt. Das Kolbenglied (10, 17) weist auf seiner der Schaltkammer (16) zugewandten Seite eine Kolbenfläche (9) auf, auf der es von dem Druck in der Schaltkammer (16) beaufschlagt ist. Dieser Druck ist dem Druck am Auslaß (7) und damit dem Verbraucherkreisdruck gleich.

Auf seiner die Rückseite der Kolbenfläche (9) bildenden Seite ist das Kolbenglied (10, 17) von einer Schaltfeder (11) beaufschlagt. Deren Kraft ist auf bekannte Weise mittels einer Einstellschraube und eines Federtellers, die nicht näher bezeichnet sind, einstellbar. Das Kolbenglied (10, 17) weist eine den von dem Einlaßsitz (3) umschlossenen Durchbruch in der erwähnten Gehäusewand in der durchdringende Kolbenstange (17) auf, mit der es auf den Ventilkörper (4) einwirken kann. Die Kolbenstange (17) geht von der Kolbenfläche (9) aus.

Statt des dargestellten Kolbenglieds (10, 17) mit gleitendem Dichtelement sind auch Membran-Kolbenglieder üblich.

In der Druckbegrenzungseinrichtung (5) ist des weiteren ein Auslaßventil (4, 6) vorgesehen, welches von dem Ventilkörper (4) und einem an dem ventilkörperseitigen Ende der Kolbenstange (17) angeordneten Auslaßsitz (6) gebildet wird. Das Kolbenglied wird von einem Druckabbaukanal (14) durchdrungen, der einerseits innerhalb des Auslaßsitzes (6) und andererseits in die Druckabbaukammer (15) mündet.

Der Ventilkörper (4) ist durch eine nicht näher bezeichnete Schließfeder auf den Einlaßsitz (3) zu vorgespannt.

Die Darstellung zeigt die Druckmittelanlage im drucklosen Zustand, d. h. im gegenüber dem Atmosphärendruck überdruckfreien Zustand. In diesem Zustand ist die Schaltfeder (11) auf ihre größtmögliche Einbaulänge entspannt, wodurch das Kolbenglied (10, 17) gegen einen nicht näher bezeichneten Gehäuseanschlag gedrückt wird. Dieser Gehäuseanschlag legt zugleich die größtmögliche Einbaulänge der Schaltfeder (11) und damit, neben deren Federrate, die von der Schaltfeder (11) auf den Schaltkolben ausgeübte Kraft fest. Der Ventilkörper (4) wird in dieser Stellung von der Kolbenstange gegen die Kraft der Schließfeder in eine Stellung gedrückt, in der das Auslaßventil (4, 6) geschlossen und das Einlaßventil (3, 4) voll geöffnet ist.

Tritt nun die Druckerzeugungsanlage (1) in Funktion, so kann das von dieser geförderte Druckmittel zunächst durch das geöffnete Einlaßventil (3, 4) von dem Einlaß (2) zu dem Auslaß (7) und von dort in den Verbraucherkreis (8) strömen. Dabei baut sich in der gesamten Druckmittelanlage der gleiche Anlagendruck auf. Mit zunehmendem Anlagendruck entfernt sich das Kolbenglied (10, 17) unter Zusammendrückung der Schaltfeder (11) von dem erwähnten Gehäuseanschlag, bewegt sich also in der Figur abwärts. Der Ventilkörper (4) folgt dieser Bewegung unter der Einwirkung der Schließfeder bis zur Anlage an den gehäusefesten Einlaßsitz (3). Durch die Anlage des Ventilkörpers (4) an den Einlaßsitz (3) wird das Einlaßventil (3, 4) geschlossen. Das Auslaßventil (4, 6) bleibt dabei geschlossen. Der Anlagendruck, bei dem sich das Einlaßventil (3, 4) schließt, ist der Begrenzungsdruck der Druckbegrenzungseinrichtung (5).

Eine durch die fortgesetzte Förderung der Druckerzeugungsanlage hervorgerufene weitere Drucksteigerung am Einlaß (2) kann sich jetzt in den Verbraucherkreis (8) nicht fortpflanzen. Deshalb kann der Verbraucherkreisdruck den Wert des Begrenzungsdrucks nicht überschreiten.

Sinkt nun, beispielsweise infolge Druckmittelverbrauchs oder wegen Leckagen, der Verbraucherkreisdruck und damit der Druck in der Schaltkammer (16) unter den Wert des Begrenzungsdrucks, so kann sich die Schaltfeder (11) entspannen und dabei das Kolbenglied (10, 17) und den Ventilkörper (4) in Öffnungsrichtung des Einlaßventils (3, 4) bewegen, so daß Druckmittel bis zum Wiedererreichen des Begrenzungsdrucks in den Verbraucherkreis (8) nachströmen kann.

Versucht aus irgend einem Grund, z. B. infolge Erwärmung, der Verbraucherkreisdruck den Begrenzungsdruck zu überschreiten, so wird die Schaltfeder weiter gespannt, wodurch das Kolbenglied (10, 17) sich in der Zeichnung weiter abwärts bewegt. Dabei löst sich der Auslaßsitz (6) von dem von dem Einlaßsitz (3) festgehaltenen Ventilkörper (4), dadurch das Auslaßventil (4, 6) öffnend. Durch das geöffnete Auslaßventil (4, 6) kann nun Druckmittel aus dem Verbraucherkreis (8) bis zum Wiedererreichen des Begrenzungsdruck in dem Verbraucherkreis (8) durch den Druckabbaukanal (14) in die Druckabbaukammer (15) und aus dieser über die Drossel (12) in die Atmosphäre entweichen.

Nun sei angenommen, es trete zwischen der Schaltkammer (16) und der Druckabbaukammer (15) eine Undichtigkeit auf, die zu einem Abfall des Verbraucherkreisdrucks unter den Wert des Begrenzungsdrucks führt. Eine solche Undichtigkeit kann beispielsweise auf einen Defekt des Dichtelements des Kolbenglieds (10, 17), aber auch auf einen Bruch des Kolbenglieds (10, 17) zurückzuführen sein. Dann wird, wie vorstehend beschrieben, das Einlaßventil (3, 4) bei geschlossenem Auslaßventil (4, 6) geöffnet. Ist die durch die Undichtigkeit in die Druckabbaukammer (15) und von dort in die Atmosphäre abströmende Druckmittel-Verlustmenge klein, kann die Druckerzeugungsanlage (1) den Begrenzungsdruck in dem Verbraucherkreis (8) oder wenigstens einen geringeren Notdruck in der gesamten Druckmittelanlage aufrechterhalten.

Ist jedoch die Undichtigkeit groß, könnte die Druckmittel-Verlustmenge so groß sein, daß die Druckerzeugungsanlage (1) bei einer Druckbegrenzungseinrichtung nach dem Stand der Technik nicht in der Lage wäre, wenigstens einen Notdruck aufrechtzuerhalten. Eine derartig große Druckmittel-Verlustmenge verhindert jedoch die Drossel (12). Durch die Drossel (12) wird die durch die Undichtigkeit abströmende Druckmittel-Verlustmenge in jedem Fall auf einen solchen Wert begrenzt, der der Druckerzeugungsanlage (1) die Aufrechterhaltung eines Notdrucks in der Druckmittelanlage ermöglicht.

Zur Erzielung dieses Ergebnisses muß der Querschnitt der Drossel (12) auf die Förderkapazität der Druckerzeugungsanlage (1) abgestimmt sein. Das bedeutet, daß im Prinzip mit abnehmender Förderkapazität der Druckerzeugungsanlage (1) auch der Drosselquerschnitt abnehmen muß. Im Falle einer Druckerzeugungsanlage (1) mit veränderlicher Förderkapazität, wie sie beispielsweise in Fahrzeugen infolge der veränderlichen Motordrehzahl üblich sind, muß dies bei der Bemessung des Drosselquerschnitts berücksichtigt werden.

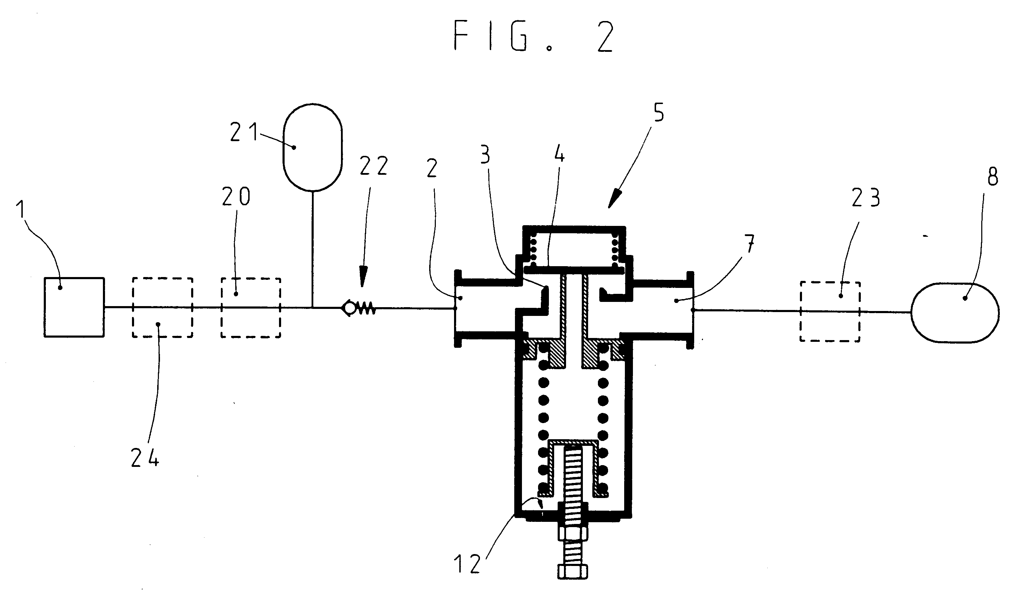

Fig. 2 zeigt eine zweikreisige Druckmittelanlage, in welcher der in Fig. 1 einzige Verbraucherkreis (8) einen ersten Verbraucherkreis darstellt, während ein zweiter Verbraucherkreis (21) zwischen dem Einlaß (2) der Druckbegrenzungseinrichtung (5) und der Druckerzeugungsanlage (1) angeordnet ist.

Der erste Verbraucherkreisdruck sei mit $p_8$, der zweite Verbraucherkreisdruck sei mit $p_{21}$ bezeichnet. $p_8$ kann als Höchstwert $p_{8M}$ den Wert des Begrenzungsdrucks der Druckbegrenzungseinrichtung (5), $p_{21}$ kann als Höchstwert $p_{21M}$ den höchsten Förderdruck der Druckerzeugungsanlage (1) annehmen.

Solche Druckmittelanlagen, in denen einem zweiten Verbraucherkreis mit einem höheren Druckniveau über eine Druckbegrenzungseinrichtung ein erster Verbraucherkreis mit einem geringeren Druckniveau nachgeschaltet ist, sind allgemein bekannt. Als Beispiel für eine solche Druckmittelanlage sei eine Bremsanlage für Fahrzeuge erwähnt, in der der zweite Verbraucherkreis mit dem höheren Druckniveau ein Betriebsbremskreis und der erste Verbraucherkreis mit dem geringeren Druckniveau ein Hilfsbremskreis und/oder ein Hilfsgerätekreis und/oder ein Anhänger-Versorgungs- und Steuerkreis sein kann.

Es ist üblich, in einer derartigen Druckmittelanlage den ersten Verbraucherkreis über ein Rückschlagventil an den zweiten Verbraucherkreis anzuschließen. Das Rückschlagventil, welches beispielsweise dem in der WABCO Westinghouse-Druckschrift "Rückschlagventil 434 014", Ausgabe August 1973, beschriebenen entsprechen kann, ist dann zwischen dem Einlaß der Druckbegrenzungseinrichtung und dem zweiten Verbraucherkreis derart angeordnet, daß es eine Druckmittelströmung von dem zweiten Verbraucherkreis in den ersten Verbraucherkreis zuläßt und eine Druckmittelströmung in entgegengesetzter Richtung verhindert.

In dem betrachteten Ausführungsbeispiel ist anstelle des üblichen Rückschlagventils ein Rückschlagventil (22) mit vorbestimmtem Öffnungsdruck $p_{\ddot{O}}$ zwischen dem Einlaß (2) der Druckbegrenzungseinrichtung (5) und dem zweiten Verbraucherkreis (21) angeordnet. Die Bestimmung des Öffnungsdrucks $p_{\ddot{O}}$ kann beispielsweise dadurch erfolgen, daß die üblicherweise nur dem sicheren Schließen dienende Feder auf den Ventilkörper eine definierte Kraft ausübt. Ein solches Rückschlagventil öffnet sich bei druckloser Abströmseite, d. h, wenn an seiner Abströmseite nur der Atmosphärendruck ansteht, immer dann, wennn an seiner Anströmseite der eingestellte Öffnungsdruck $p_{\ddot{O}}$ auftritt. Steigt nach dem Öffnen des Rückschlagventils der Druck auf dessen Abströmseite an, so hält das Rückschlagventil eine Druckdifferenz vom Werte des Öffnungsdruckes $p_{\ddot{O}}$ zwischen seiner Anströmseite und seiner Abströmseite aufrecht.

Diese Charakteristik des Rückschlagventils mit vorbestimmtem eingestelltem Öffnungsdruck $p_{\ddot{O}}$ bedeutet im vorliegenden Fall, daß das Rückschlagventil (22) immer dann für die Druckmittelströmung aus dem zweiten Verbraucherkreis (21) in Richtung des ersten Verbraucherkreises (8) geöffnet ist, wenn die Druckdifferenz zwischen dem ersten Verbraucherkreisdruck $p_{21}$ und dem Druck am Einlaß (2) der Druckbegrenzungseinrichtung (5) gleich dem Öffnungsdruck $p_{\ddot{O}}$ ist, sowie, daß das Rückschlagventil (22) diese Druckdifferenz immer einstellt.

Der Öffnungsdruck des Rückschlagventils (22) ist gerade auf die Differenz der Höchstwerte der Verbraucherkreisdrücke eingestellt, also $p_{\ddot{O}} = p_{21M} - p_{8M}$.

Wird die Druckmittelanlage nach Fig. 2, ausgehend von dem drucklosen Zustand, aufgefüllt, so strömt Druckmittel durch das offene Einlaßventil (3, 4) der Druckbegrenzungseinrichtung (5) erst, nachdem sich im zweiten Verbraucherkreis (21) der Öffnungsdruck $p_{\ddot{O}}$ des Rückschlagventils (22) aufgebaut hat. Anschließend steigen die Verbraucherkreisdrücke $p_{21}$ und $p_8$ unter Einhaltung der Druckdifferenz von $p_{\ddot{O}} = p_{21M} - p_{8M}$ an, bis in den Verbraucherkreisen (8 bzw. 21) die jeweiligen Höchstwerte $p_{8M}$ bzw. $p_{21M}$ erreicht sind. Jetzt ist auch das Einlaßventil (3, 4) der Druckbegrenzungseinrichtung (5) geschlossen.

Tritt nun der beim Ausführungsbeispiel nach Fig. 1 erwähnte Fall einer großen Undichtigkeit zwischen der Schaltkammer (16) und der Druckabbaukammer (15) der Druckbegrenzungseinrichtung (5) auf, so ermöglicht die Drossel (12) der Druckerzeugungsanlage (1) die Aufrechterhaltung wenigstens eines Notdruckes $p_{8Not}$ in dem ersten Verbraucherkreis (8). Diesem Druck entspricht aber im zweiten Verbraucherkreis (21) ein um den Wert des Öffnungsdruckes $p_{\ddot{O}}$ des Rückschlagventils (22) erhöhter zweiter Verbraucherkreisdruck $p_{21Not} = p_{8Not} + p_{\ddot{O}}$. Beim Auftreten der genannten großen Undichtigkeit wird also im zweiten Verbraucherkreis (21) ein Notdruck $p_{21Not}$ aufrechterhalten, der um den Wert des Öffnungsdrucks $p_{\ddot{O}}$ des Rückschlagventils (22) größer als der Notdruck $p_{8Not}$ des ersten Verbraucherkreises (8) ist.

Wie weiter vorn schon ausgeführt wurde, muß im Prinzip mit abnehmender Förderkapazität der Druckerzeugungsanlage auch der Drosselquerschnitt abnehmen. Dies bedeutet in einer Druckmittelanlage mit einem üblichen Rückschlagventil anstelle des Rückschlagventils (22) mit vorbestimmtem Öffnungsdruck einen sehr kleinen Drosselquerschnitt, wenn bei kleiner Förderkapazität der Druckerzeugungsanlage (1) ein hoher Notdruck $p_{21Not}$ im zweiten Verbraucherkreis (21) aufrechterhalten bleiben soll. Auch in dieser Hinsicht ist die gewählte Ausgestaltung des Rückschlagventils (22) vorteilhaft. Sie ermöglicht nämlich den angestrebten hohen Notdruck $p_{21Not}$ in dem zweiten Verbraucherkreis (21) mit einem Drosselquerschnitt, der größer als bei Verwendung eines üblichen Rückschlagventils ist, sich leichter herstellen und auch weniger verschmutzungsempfindlich ist.

Die bisher beschriebene Grundausführung der Druckmittelanlage nach Fig. 2 läßt sich durch Anordnung eines Überströmventils zwischen der Druckerzeugungsanlage (1) und dem zweiten Verbraucherkreis (21) sowie eines Überströmventils zwischen dem Auslaß (7) der Druckbegrenzungseinrichtung (5) und dem zweiten Verbraucherkreis (8) fortbilden. Solche Überströmventile sind in Fig. 2 als gestrichelt dargestellte Blöcke (20; 23) angedeutet. Solche Überströmventile dienen der Sicherstellung der Auffüllreihenfolge der Verbraucherkreise und im Falle eines Defektes in einem der Verbraucherkreise (8 bzw. 21), der Absicherung des anderen Verbraucherkreises. Der Öffnungsdruck des dem ersten Verbraucherkreis (8) zugeordneten Schutzventils (23) muß unterhalb des Begrenzungsdrucks der Druckbegrenzungseinrichtung (5) liegen. Der Öffnungsdruck des dem zweiten Verbraucherkreis (21) zugeordneten Überströmventils (20) kann, muß aber nicht, höher als der Öffnungsdruck des Überströmventils (23) sein. Zweckmäßig ist es, daß der Öffnungsdruck des Überströmventils (20) des zweiten Verbraucherkreises (21) um den Wert des Öffnungsdrucks $p_Ö$ des Rückschlagventils (22) größer als der Öffnungsdruck des Überströmventils (23) des ersten Verbraucherkreises (8) ist.

Als weitere Fortbildungsmöglichkeit zeigt das Ausführungsbeispiel noch gestrichelt eine Druckbegrenzungseinrichtung (24) beliebiger Bauart zwischen der Druckerzeugungsanlage (1) und dem zweiten Verbraucherkreis (8). Der Begrenzungsdruck dieser Druckbegrenzungseinrichtung (24) muß auf den Höchstwert $p_{21M}$ des zweiten Verbraucherkreisdrucks (21) eingestellt werden, so daß die Differenz der Begrenzungsdrücke beider Druckbegrenzungseinrichtungen (24 und 5) dem Öffnungsdruck $p_Ö$ des Rückschlagventils (22) entspricht. Bei dieser Fortbildung kann die Druckerzeugungsanlage (1), beispielsweise zur Vergrößerung des Arbeitsvermögens der Druckmittelanlage, auf ein noch höheres Druckniveau ausgelegt sein.

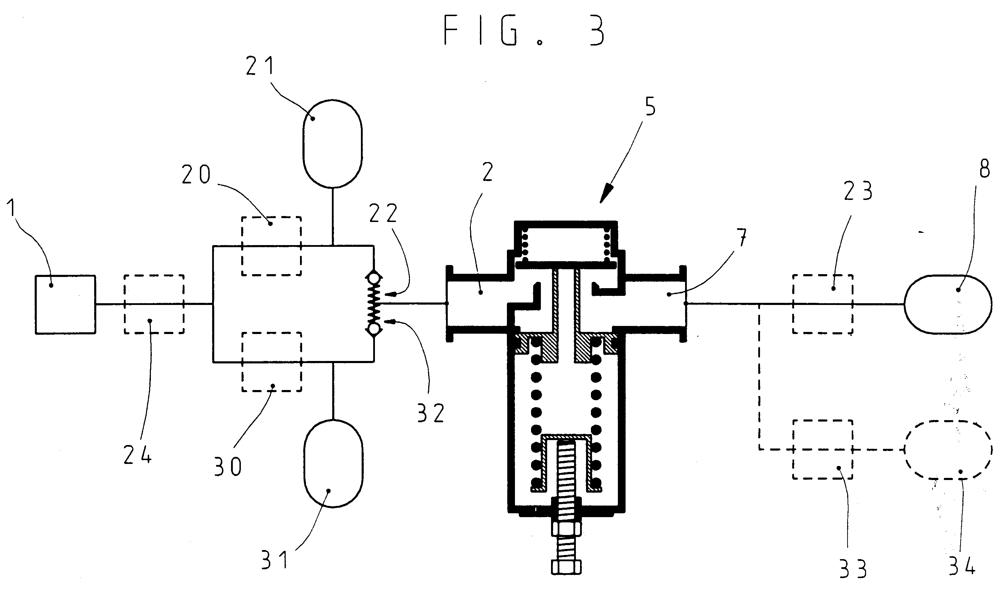

Fig. 3 zeigt eine dreikreisige Druckmittelanlage, in der zwischen dem Einlaß (2) der Druckbegrenzungseinrichtung (5) und der Druckerzeugungsanlage (1) ein parallel zu dem zweiten Verbraucherkreis (21) liegender weiterer zweiter Verbraucherkreis (31) angeordnet ist. Zwischen diesem Verbraucherkreis (31) und dem Einlaß (2) der Druckbegrenzungseinrichtung (5) ist ein Rückschlagventil (32) angeordnet, welches den gleichen vorbestimmten Öffnungsdruck wie das Rückschlagventil (22) aufweist. Beide Rückschlagventile lassen sich deshalb, wie zeichnerisch angedeutet, unter Verwendung einer gemeinsamen Feder zu einer Baueinheit vereinigen.

Für den weiteren zweiten Verbraucherkreis (31) und sein Zusammenwirken mit der übrigen Druckmittelanlage gelten die im Zusammenhang mit dem zweiten Verbraucherkreis (21) gemachten Ausführungen entsprechend.

Auch solche Druckmittelanlagen sind allgemein bekannt. Beispielhaft sei eine Fahrzeugbremsanlage mit zweikreisiger Betriebsbremsanlage erwähnt, in der jeweils ein Betriebsbremskreis von einem der zweiten Verbraucherkreise (21 und 31) des Ausführungsbeispiels dargestellt wird. Auch zwischen dem weiteren zweiten Betriebsbremskreis (31) und der Druckerzeugungsanlage (1) läßt sich zur Fortbildung des Ausführungsbeispiels, wie gestrichelt angedeutet, ein Überströmventil (30) anordnen.

Weitere zweite Verbraucherkreise, für die das soeben Gesagte mitgilt, lassen sich parallel zu den dargestellten zweiten Verbraucherkreisen anordnen.

Die Druckmittelanlage läßt sich auch um einen oder mehrere weitere erste Verbraucherkreise fortbilden, für die das zu dem ersten Verbraucherkreis (8) Gesagte entsprechend mitgilt. Beispielhaft ist gestrichelt ein weiterer erster Verbraucherkreis (34) dargestellt. Auch dieser kann, wie der erste Verbraucherkreis (8), durch ein gestrichelt angedeutetes Überströmventil (33) fortgebildet werden.

Als bei den Fortbildungen der Ausführungsbeispiele erwähnte Überströmventile können solche der in der WABCO Westinghouse-Druckschrift "Überströmventil 434 100", Ausgabe August 1973 beschriebenen Bauarten Verwendung finden, wobei die Bedingungen des Einzelfalles die genaue Bauart bestimmen. Die in den Ausführungsbeispielen erwähnten Überströmventile bilden zusammen mit dem Rückschlagventil bzw. den Rückschlagventilen jeweils ein Schutzsystem, für welches beispielsweise die Ausführungen in der US 4817502 entsprechend gelten. Aus dieser Veröffentlichung ist auch bekannt, daß solche Schutzsysteme in einer Baueinheit jeweils zu einem Mehrkreisschutzventil zusammengefaßt werden können.

Auch im übrigen gelten, sofern sich aus dem Vorstehenden nichts Widersprechendes ergibt, die für ein Ausführungsbeispiel gemachten Ausführungen für die anderen Ausführungsbeispiele direkt oder entsprechend mit.

Der Fachmann erkennt, daß sich der Schutzbereich der Erfindung nicht in den beschriebenen Ausführungsbeispielen erschöpft, sondern alle Ausgestaltungen erfaßt, deren Merkmale sich den Patentansprüchen unterordnen.

**Patentansprüche**

1. Druckbegrenzungseinrichtung mit

   a) einem mit einer Druckerzeugungsanlage (1) verbundenen Einlaß (2),

   b) einem mit wenigstens einem Verbraucherkreis (8; 34) verbundenen Auslaß (7),

   c) einem den Einlaß (2) mit dem Auslaß (7) verbindenden Einlaßventil (3, 4),

   d) einem den Auslaß (7) mit einer, mit einem Druckentlastungsraum verbundenen, Druckabbaukammer (15) verbindenden Auslaßventil (4, 6),

e) einer Schaltfeder (11),

f) einem das Öffnen und Schließen der genannten Ventile (3, 4 und 4, 6) bewirkenden, eine mit dem Auslaß (7) verbundene Schaltkammer (16) abgedichtet von der Druckabbaukammer (15) trennenden, beweglichen Kolbenglied (10, 17), wobei

h) das Kolbenglied (10, 17) in Richtung des Öffnens des Auslaßventils (4, 6) und des Schließens des Einlaßventils (3, 4) von dem Druck in der Schaltkammer (16) und in Richtung des Öffnens des Einlaßventils (3, 4) und des Schließens des Auslaßventils (4, 6) von der Schaltfeder (11) beaufschlagt ist, dadurch gekennzeichnet, daß

i) in der Verbindung zwischen der Druckabbaukammer (15) und dem Druckentlastungsraum eine Drossel (12) angeordnet ist, die so bemessen ist, daß sie auch bei großer Undichtigkeit zwischen der Schaltkammer (16) und der Druckabbaukammer (15) der Druckerzeugungsanlage (1) auch bei geringer Förderkapazität die Aufrechterhaltung wenigstens eines Notdrucks in der Druckmittelanlage ermöglicht.

2. Druckbegrenzungseinrichtung nach Anspruch 1, deren Einlaß (2) über wenigstens einen zweiten Verbraucherkreis (21; 31) mit einem das Druckniveau des mit dem Auslaß (7) der Druckbegrenzungseinrichtung (5) verbundenen Verbraucherkreises (8; 34) übersteigenden Druckniveau mit der Druckerzeugungsanlage (1) verbunden ist, dadurch gekennzeichnet, daß zwischen dem Einlaß (2) der Druckbegrenzungseinrichtung (5) und dem zweiten Verbraucherkreis (21; 31) ein Rückschlagventil (22; 32) mit vorbestimmtem Öffnungsdruck angeordnet ist, dessen Öffnungsdruck gleich der Druckdifferenz zwischen den Druckniveaus der Verbraucherkreise (22; 32) ist.

**Claims**

1. Pressure-limiting device having

a) an inlet (2) connected to a pressure-generating system (1),

b) an outlet (7) connected to at least one consumer circuit (8; 34),

c) an inlet valve (3, 4) connecting the inlet (2) to the outlet (7),

d) an outlet valve (4, 6) connecting the outlet (7) to a pressure-reducing chamber (15) connected to a pressure discharge space,

e) an actuating spring (11),

f) a displaceable piston member (10, 17), which effects the opening and closing of the mentioned valves (3, 4 and 4, 6) and which separates and seals off an actuating chamber (16) connected to the outlet (7) from the pressure-reducing chamber (15), with

h) the piston member (10, 17) being acted upon, in the direction of the opening of the outlet valve (4, 6) and the closing of the inlet valve (3, 4), by the pressure in the actuating chamber (16) and, in the direction of the opening of the inlet valve (3, 4) and the closing of the outlet valve (4, 6), by the actuating spring (11), characterised in that

i) there is arranged in the connection between the pressure-reducing chamber (15) and the pressure discharge space a throttle (12), which is so dimensioned that at least an emergency pressure can be maintained in the pressure medium system even when there is a major leak between the actuating chamber (16) and the pressure-reducing chamber (15) of the pressure-generating system (1) even when the delivery capacity is low.

2. Pressure-limiting device according to claim 1, the inlet (2) of which is connected to the pressure-generating system (1) via at least one second consumer circuit (21; 31) having a pressure level exceeding the pressure level of the consumer circuit (8; 34) connected to the outlet (7) of the pressure-limiting device (5), characterised in that there is arranged between the second consumer circuit (21; 31) and the inlet (2) of the pressure-limiting device (5) a non-return valve (22; 32) having a pre-determined opening pressure, the opening pressure of which non-return valve (22; 32) is equal to the pressure difference between the pressure levels of the consumer circuits (22; 32).

**Revendications**

1. Dispositif de limitation de pression, comprenant :

a) une entrée (2) reliée à une installation de production de pression (1),
b) une sortie (7) reliée à au moins un circuit utilisateur (8 ; 34),
c) une valve d'entrée (3, 4) qui relie l'entrée (2) à la sortie (7),

d) une valve de sortie (4, 6) qui relie la sortie (7) à une chambre de réduction de pression (15) reliée à un espace de décharge de pression,

e) un ressort de commutation (11),

f) un organe de piston (10, 17) mobile, qui sépare de façon étanche par rapport à la chambre de réduction de pression (15) une chambre de commutation (16) reliée à la sortie (7), et qui assure l'ouverture et la fermeture des valves précitées (3, 4 et 4, 6), et où

h) l'organe formant piston (10, 17) est sollicité en direction de l'ouverture de la valve de sortie (4, 6) et de la fermeture de la valve d'entrée (3, 4) par la pression dans la chambre de commutation (16), et en direction de l'ouverture de la valve d'entrée (3, 4) et de la fermeture de la valve de sortie (4, 6) par le ressort de commutation (11),

caractérisé en ce que

i) dans la jonction entre la chambre de réduction de pression (15) et l'espace de décharge de pression est agencé un étranglement (12) dont les dimensions sont choisies de manière que, même lors d'un défaut d'étanchéité prononcé entre la chambre de commutation (16) et la chambre de réduction de pression (15) de l'installation de production de pression (1), il permet le maintien d'eau moins une pression de secours dans l'installation à fluide sous pression, même dans le cas d'une faible capacité de refoulement.

2. Dispositif de limitation de pression selon la revendication 1, dont l'entrée (2) est reliée à l'installation de production de pression (1) via au moins un second circuit utilisateur (21 ; 31) avec un niveau de pression qui dépasse le niveau de pression du circuit utilisateur (8 ; 34) relié à la sortie (7) du dispositif de limitation de pression (5),

caractérisé en ce que

entre l'entrée (2) du dispositif de limitation de pression (5) et le second circuit utilisateur (21 ; 31) est agencé un clapet anti-retour (22, ; 32) avec une pression d'ouverture prédéterminée, dont la pression d'ouverture est égale à la différence de pression entre les niveaux de pression des circuits utilisateurs (22 ; 32).

EP 0 659 621 B1

# FIG. 1

# FIG. 2

EP 0 659 621 B1

FIG. 3

EP 0 659 621 B1